# EUROPÄISCHE PATENTSCHRIFT

(11) **EP 1 072 556 B1**
(45) Veröffentlichungstag und Bekanntmachung des Hinweises auf die Patenterteilung: **22.03.2006**
(21) Anmeldenummer: 00115866.6
(22) Anmeldetag: 24.07.2000
(51) Int. Cl.: B67D 5/34, F16K 31/06, F16K 39/02

(54) **Zapfsystem für Tanksäulen**
Tap system for petrol pumps
Système de soutirage pour pompe à essence

(30) Priorität: 22.07.1999 DE 29912814 U
(43) Veröffentlichungstag der Anmeldung: 31.01.2001
(73) Patentinhaber: Bürkert Werke GmbH & Co., D-74653 Ingelfingen (DE)
(72) Erfinder: Böke, Harald, 32689 Kalletal-Kalldorf (DE)
(74) Vertreter: Degwert, Hartmut

(56) Entgegenhaltungen:
- EP-A- 0 872 674
- US-A- 3 797 526
- US-A- 5 551 664

## Beschreibung

Die Erfindung betrifft ein Zapfsystem für Tanksäulen gemäß dem Oberbegriff von Anspruch 1.

Zapfsysteme für Tanksäulen, bei denen es möglich ist, eine gewünschte Kraftstoffmenge vorzuwählen, werden so gesteuert, daß kurz vor Erreichen des gewählten Wertes ein Hauptventil geschlossen wird und die restliche Kraftstoffmenge über ein Bypass-Ventil gepumpt wird. Bei Erreichen des gewählten Wertes wird auch dieses geschlossen. Bei Zapfsystemen, wie sie aus dem Stand der Technik bekannt sind, werden die beiden Ventile getrennt, beispielsweise über zwei elektrisch angesteuerte Magnete, betätigt.

### < Seite la >

Die Erfindung stellt ein Zapfsystem für Tanksäulen bereit, bei dem die Steuerung des Hauptventils und des Bypass-Ventils auf eine einfache, zuverlässige und kostengünstige Weise erfolgt.

Dies wird bei einem Zapfsystem für Tanksäulen, mit einer Pumpe, einem Zapfventil in einer Zapfpistole und einem elektrisch ansteuerbaren Magnetventil durch die im kennzeichnenden Teil von Anspruch 1 angegebenen Merkmale erreicht.

Aus der US-A-5 551 664 ist ein hilfsgesteuertes Ventil eines Zapfsystems für Fahrzeuge bekannt, das ein Hauptventil sowie mindestens ein Vorsteuerventil aufweist, das durch einen Magnetantrieb in die Offenstellung schaltbar ist. Bei geöffnetem Vorsteuerventil ist über dem Dichtsitz des Hauptventils ein Differenzdruck vorhanden, wodurch auch das Hauptventil in die Offenstellung bewegt wird. Ein in den Dichtkörper des Hauptventils integriertes Rückschlagventil verhindert bei einem höheren Druck in der Ableitung als in der Zuleitung einen Rückfluß des Kraftstoffs von der Ableitung in die Zuleitung, und ein als Meßgrenzventil wirkendes Rüchsclagventil ist im Ventilkörper integriert.

Aus der EP-A-0 872 674 ist ein Magnetventil bekannt, das ein Hauptventil und ein Vorsteuerventil aufweist, die durch einen Magnetantrieb betätigbar sind. Bei geöffnetem Vorsteuerventil wird das Hauptventil druckausgeglichen geöffnet, so daß die ganze zur Verfügung stehende Magnetkraft ausschließlich für den Öffnungsvorgang benutzt wird.

Das Hauptventil und ein in Bypass-Anordnung angeordnetes Bypass-Ventil werden über einen einzigen elektrisch angesteuerten Magnetantrieb geöffnet. Ob dabei das Hauptventil und das Bypass-Ventil geöffnet werden oder nur das Bypass-Ventil geöffnet wird, hängt davon ab, ob ein Differenzdruck über dem Dichtsitz des Hauptventils vorhanden ist. Damit wird eine einfache und kostengünstige Lösung bereitgestellt, die es ermöglicht, je nach Bedarf nur ein Ventil oder beide Ventile zu öffnen. Über das Rückschlagventil kann bei zu hohem Druck in der Ableitung, beispielsweise durch Expansion des Kraftstoffs aufgrund von starker Sonneneinstrahlung oder durch Überfahren des Tankschlauchs von einem Auto, Kraftstoff von der Ableitung in die Zuleitung gelangen, um Schäden am Zapfventil oder Magnetventil zu vermeiden.

Gemäß einer vorteilhaften Ausführungsform ist es vorgesehen, daß bei aktiver Pumpe und geöffnetem Zapfventil das Hauptventil durch kurzzeitiges Abschalten des Magnetantriebs geschlossen wird und bei erneutem Einschalten des Magnetantriebs aufgrund des über seinem Dichtsitz herrschenden Differenzdrucks geschlossen bleibt.

Damit wird bei Zapfsäulen, bei denen es möglich ist, eine gewünschte Kraftstoffmenge vorzuwählen, erreicht, daß kurz vor Erreichen des vorgewählten Wertes kurzzeitig beide Ventile schließen und die restliche Kraftstoffmenge über das Bypass-Ventil gepumpt wird. Der geringere Durchfluß über das Bypass-Ventil ermöglicht eine genauere Dosierung des Kraftstoffes.

Weitere Merkmale und vorteilhafte Ausgestaltungen der Erfindung ergeben sich aus den Unteransprüchen.

Die Erfindung wird nachfolgend unter Bezugnahme auf mehrere Ausführungsformen beschrieben, die in den beigefügten Zeichnungen dargestellt sind. In diesen zeigen:
- Fig. 1 ein erfindungsgemäßes Magnetventil eines Zapfsystems für Tanksäulen im geschlossenen Zustand in einer Schnittansicht gemäß einer ersten Ausführungsform;
- Fig. 2 ein erfindungsgemäßes Magnetventil eines Zapfsystems für Tanksäulen im geschlossenen Zustand in einer Schnittansicht gemäß einer zweiten Ausführungsform;

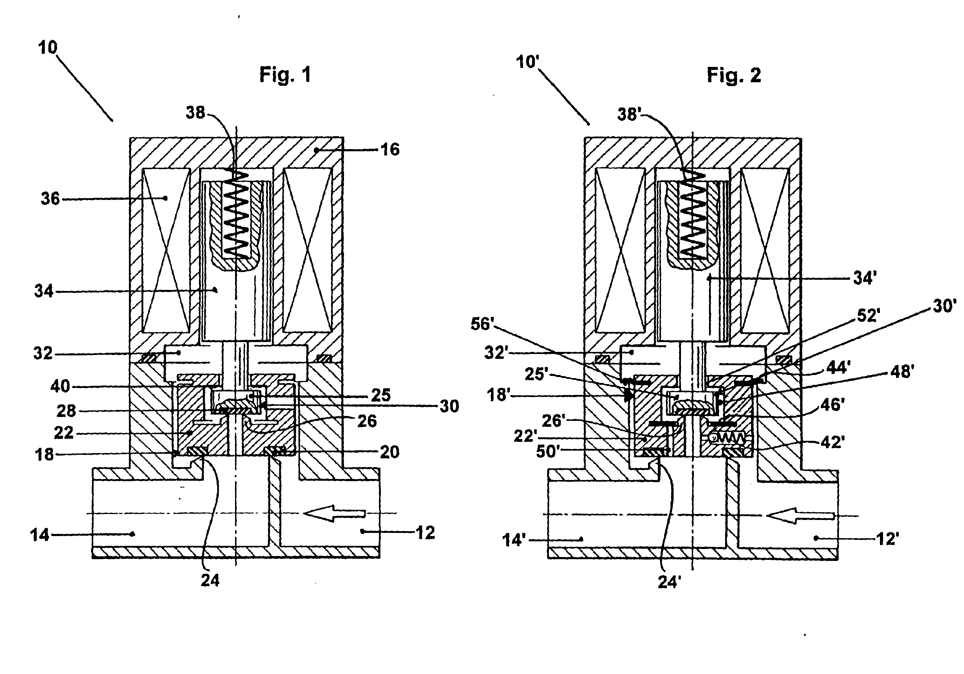

Das in Figur 1 abgebildete Magnetventil 10 ist über eine Zuleitung 12 mit einer (hier nicht abgebildeten) Pumpe und über eine Ableitung 14 mit einer (hier nicht abgebildeten) Zapfpistole mit Zapfventil verbunden. Das Magnetventil 10 weist in einem Ventilkörper 16 ein Hauptventil 18 mit einer ringförmigen Dichtung 20 in einem Dichtkörper 22 auf. Die ringförmige Dichtung 20 liegt im geschlossenen Zustand auf einem Dichtsitz 24 des Hauptventils 18 auf. In dem Dichtkörper 22 des Hauptventils 18 ist ein Dichtkörper 25 mit einem Dichtsitz 26 und einer Dichtung 28 eines Bypass-Ventils 30 gebildet. Im Ventilkörper 16 ist bezüglich Figur 1 oberhalb des Dichtkörpers 22 des Hauptventils 18 ein Hohlraum 32 ausgebildet, der in Verbindung zu der Zuleitung 12 steht. Das Bypass-Ventil 30 ist zu dem Hauptventil 18 in Bypass-Anordnung angeordnet. Durch einen Magnetantrieb 34, der über eine Zylinderspule 36 elektrisch an- bzw. abgeschaltet wird, sind die beiden Ventile 18, 30 steuerbar. Im stromlosen Zustand ist das Magnetventil 10 durch eine Druckfeder 38 selbstschließend.

Beim Entnehmen der (hier nicht abgebildeten) Zapfpistole aus der Tanksäule wird das Magnetventil 10 über die Zylinderspule 36 elektrisch angesteuert. Dabei kann die Pumpe gleichzeitig mit dem Magnetventil 10 oder auch verzögert geschaltet werden.

Ist der Druck über dem Dichtsitz 24 des Hauptventils 18 auf der der Pumpe zugewandten Seite gleich groß wie der Druck auf der der Zapfpistole zugewandten Seite, werden das Hauptventil 18 und das Bypassventil 30 geöffnet. Dabei greift der Magnetantrieb 34 direkt an dem Dichtkörper 25 des Bypass-Ventils 30 an, so daß dieser bezüglich Figur 1 nach oben bewegt wird. Der Dichtkörper 22 des Hauptventils 18 wird anfangs nicht bewegt. Erst wenn der Dichtkörper 25 des Bypass-Ventils 30 über eine Anschlagfläche 40 am Dichtkörper 22 des Hauptventils 18 angreift, wird auch dieser bezüglich Figur 1 nach oben bewegt. Dadurch wird auch das Hauptventil 18 geöffnet, und Kraftstoff wird durch die Pumpe von der Zuleitung 12 über das Hauptventil 18 und in kleineren Mengen über das Bypass-Ventil 30 zur Ableitung 14 und damit zur Zapfpistole gepumpt.

Ist der Druck über dem Dichtsitz 24 des Hauptventils 18 auf der der Pumpe zugewandten Seite größer als der Druck auf der der Zapfpistole zugewandten Seite, kann nur das Bypass-Ventil 30 geöffnet werden: Da der Hohlraum 32 über dem Dichtkörper 22 des Hauptventils 18 in Verbindung mit der Zuleitung 12 steht, ist der auf den Dichtkörper 22 wirkende Druck bezüglich Figur 1 von oben größer als von unten. Der Magnetantrieb 34 reicht dann nicht aus, das Hauptventil 18 gegen die durch die Druckdifferenz auf den Dichtkörper 22 des Hauptventils 18 wirkende Kraft nach oben zu bewegen. Der Dichtkörper 25 des Bypass-Ventils 30 wird durch den Magnetantrieb 34 bis zur Anschlagfläche 40 des Dichtkörpers 22 bewegt. Dadurch wird das Bypass-Ventil 30, geöffnet und es kann ein Druckausgleich stattfinden. Besteht keine Druckdifferenz mehr über dem Dichtsitz 24 des Hauptventils 18, kann der Magnetantrieb 34 auch den Dichtkörper 22 des Hauptventils 18 bewegen, so daß das Hauptventil 18 geöffnet wird. Ist der Tankvorgang beendet, werden die Zylinderspule 36 und die Pumpe stromlos geschaltet, und beide Ventile 18, 30 werden durch die Druckfeder 38 geschlossen.

Bei Zapfsäulen, bei denen es möglich ist, die gewünschte Kraftstoffmenge vorzuwählen, wird kurz vor Erreichen des gewählten Wertes die Zylinderspule 36 kurzzeitig stromlos geschaltet. Dadurch werden beide Ventile 18, 30 über die Druckfeder 38 geschlossen. Da sowohl die Pumpe eingeschaltet als auch das Zapfventil der Zapfpistole geöffnet ist, baut sich ein Differenzdruck über dem Hauptventilsitz 24 auf. Bei erneutem Ansteuern des Magnetventils 10 wird deshalb nur das Bypass-Ventil 30 geöffnet. Die restliche Kraftstoffmenge wird über das Bypass-Ventil 30 gepumpt. Bei Erreichen des gewünschten Wertes wird der Magnetantrieb 34 abgeschaltet, und beide Ventile 18, 30 werden über die Druckfeder 38 geschlossen.

Diese Ausgestaltung hat den Vorteil, daß ein einziger Magnetantrieb 34, der auch nur einer elektrischen Ansteuerung bedarf, zum Öffnen der beiden Ventile 18, 30 ausreicht. Damit wird ein kostengünstiges und einfaches Zapfsystem für Tankstellen bereitgestellt.

Die in Figur 2 gezeigte Ausführungsform eines Magnetventils 10' weist zusätzlich zu der in Figur 1 gezeigten Ausführungsform ein als Meßgrenzventil wirkendes Rückschlagventil 42' auf, das in den Dichtkörper 22' des Hauptventils 18' integriert ist und in Bypass-Anordnung zu dem Hauptventil 18' angeordnet ist. Zusätzlich dazu ist in einer Verbindung zwischen dem Hohlraum 32' und der Zuleitung 12' eine Membran 44' angeordnet, die am Dichtkörper 22' befestigt ist. Eine weitere Membran 46' befindet sich bezüglich Figur 2 unterhalb des Dichtkörpers 25' des Bypass-Ventils in einer Verbindung 50' zwischen der Ableitung 14' und einem Hohlraum 48'. In dem Hohlraum 48' ist der Dichtkörper 25' des Bypass-Ventils angeordnet. Der Hohlraum 32' und der Hohlraum 48' sind über eine zylinderförmige Ausnehmung 52' des Dichtkörpers 22' des Hauptventils 18' miteinander verbunden.

Erhöht sich bei geschlossenem Zapfventil und geschlossenem Magnetventil der Druck in der Ableitung 14' sehr schnell, beispielsweise durch Expansion des Kraftstoffs aufgrund von starker Sonneneinstrahlung oder durch Überfahren des Tankschlauchs von einem Auto, kann über das Rückschlagventil 42' Kraftstoff von der Ableitung 14' in die Zuleitung 12' gelangen, um Schäden am Zapfventil oder Magnetventil 10' zu vermeiden. Durch den hohen Druck in der Ableitung 14' wird eine Kugel des Rückschlagventils 42' entgegen der auf sie wirkenden Federkraft bezüglich Figur 2 nach rechts bewegt, so daß das Rückschlagventil 42' solange geöffnet ist, bis der Druck in der Ableitung 14' wieder unter einen von der Feder vorgegebenen Wert sinkt. Damit wird sichergestellt, daß der Druck in der Ableitung 14' einem bestimmten Wert nicht überschreitet. Weiterhin wird mit Hilfe der Membran 44' und der Membran 46' verhindert, daß das Hauptventil 18' und das Bypass-Ventil 30' durch den hohen Druck in der Ableitung 14' geöffnet werden: Bei Druckanstieg in der Ableitung 14' fließt Kraftstoff von der Ableitung 14' über die Verbindung 50', an der nach oben geklappten Membran 46' vorbei in den Hohlraum 48'. Vom Hohlraum 48' fließt er über die zylinderförmige Ausnehmung 52' weiter in den Hohlraum 32'. Der Druck in den Hohlräumen 32', 48' , der von seiten des Hohlraums 32' auf die Membran 44' wirkt, ist nun größer als der Druck in der Zuleitung 12', der von der anderen Seite auf die Membran 44' wirkt. Damit wird die Membran 44' an eine gehäusefeste Ringfläche 56' gedrückt, so daß ein Zurückfließen des Kraftstoffs von dem Hohlraum 32' in die Zuleitung 12' nicht möglich ist. In gleicher Weise wird durch die Membran 46' sichergestellt, daß kein Kraftstoff von den Hohlraum 48' zurück in die Ableitung 14' gelangen kann. Da nun der Druck in den Hohlräumen 32', 48' größer ist als in der Ableitung 14', bleiben das Hauptventil 18' und das Bypass-Ventil 30' geschlossen.

Damit ist in dieser Ausführungsform zusätzlich eine im Magnetventil integrierte Vorrichtung vorgesehen, die bei einem Druckanstieg in der Ableitung 14' sicherstellt, daß bei geschlossenem Zapfventil und bei geschlossenem Magnetventil 10' der Druck in der Ableitung 14' einen vorbestimmten Wert nicht überschreitet und die beiden Ventile dennoch geschlossen bleiben.

Falls Druckausgleich zuwischen Zuleitung 12' und Ableitung 14' besteht, kann der Magnetantrieb 34' beide Ventile 18', 30' öffnen.

Falls jedoch in er Zuleitung 12' ein höherer Druck als in der Ableitung 14' herrscht, erfolgt das Öffnen des Ventils folgendermaßen: das Zapfventil bleibt zu Beginn geschlossen, und über die nach oben gedückte Membrane 44' strömt Kraftstoff in den Hohlraum 32'. Das Magnetventil 10' wird angesteuert, so daß der Dichtkörper 25' geringfügig vom zugeordneten Dichtsitz abhebt. Aufgrund des höheren Druckes auf der Oberseite des Dichtkörpers 22', der bestrebt ist, diesen auf seinem Dichtsitz zu halten, ist der Magnetantrieb nicht in der Lage, den Dichtkörper 22' vom Dichtsitz 24' abzuheben. Damit dies möglich wird, muß zuerst ein Druckausgleich zwischen Ableitung 14' und Zuleitung 12' erfolgen, was durch den Zustrom von Kraftstoff über das geöffnete Bypass-Ventil 30' erfolgen kann. Erst wenn dieser Druckausgleich erfolgt ist, ist die Kraft des Magnetantriebs 34' groß genug, um den Dichtkörper 22' vom Dichtsitz 24' abzuheben. Während des Abhebens ist die Lage der Membrane 44' undefiniert, das heißt, es kann zum Zustrom oder Abstrom von Kraftstoff in oder aus dem Hohlraum 32' kommen.

## Patentansprüche

1. Zapfsystem für Tanksäulen, mit einer Pumpe, einem Zapfventil in einer Zapfpistole und einem elektrisch ansteuerbaren Magnetventil (10'), das ein Hauptventil (18') und ein in Bypass-Anordnung zu dem Hauptventil (18') angeordnetes Bypass-Ventil (30'), einen Magnetantrieb (34') und ein als Meßgrenzventil wirkendes Rückschlagventil (42'), das ab einem bestimmten Druck in der Ableitung (14') geöffnet ist, so daß Kraftstoff von der Ableitung (14') in die Zuleitung (12') gelangen kann, aufweist, **dadurch gekennzeichnet, daß** das Hauptventil (18') ein direktwirkendes Ventil ist, daß bei über dem Dichtsitz (24') des Hauptventils (18') vorhandenem Differenzdruck zunächst nur das Bypass-Ventil (30') und erst nach durch Öffnen des Bypass-Ventils (30') erfolgtem Druckausgleich am Dichtsitz (24') des Hauptventils (18') auch dieses durch den Magnetantrieb (34') in die Offenstellung schaltbar ist, und daß das Rückschlagventil (42') in einen Dichtkörper (22') des Hauptventils (18') integriert ist.

2. Zapfsystem nach Anspruch 1, **dadurch gekennzeichnet, daß** der Magnetantrieb (34') an einem Dichtkörper (25') des Bypass-Ventils (30') direkt und mit Leerhub an dem Dichtkörper (22') des Hauptventils (18') angreift.

3. Zapfsystem nach Anspruch 2, **dadurch gekennzeichnet, daß** der Dichtsitz (26') des Bypass-Ventils (30') in dem Dichtkörper (22') des Hauptventils (18') gebildet ist.

4. Zapfsystem nach einem der vorstehenden Ansprüche, **dadurch gekennzeichnet, daß** bei aktiver Pumpe und geöffnetem Zapfventil durch kurzzeitiges Abschalten des Magnetantriebs (34') das Hauptventil (18') geschlossen wird und bei erneutem Einschalten des Magnetantriebs (34') aufgrund des über seinem Dichtsitz (24') herrschenden Differenzdrucks geschlossen bleibt.

5. Zapfsystem nach einem der vorstehenden Ansprüche, **dadurch gekennzeichnet, daß** bei Druckausgleich am Dichtsitz (24') des Hauptventils (18') durch Einschalten des Magnetantriebs (34') beide Ventile (18',30') geöffnet werden.

## Claims

1. A dispensing system for petrol pumps, comprising a pump, a dispensing valve in a petrol pump nozzle and an electrically controllable solenoid valve (10') which includes a principal valve (18') and a bypass valve (30') arranged so as to bypass the principal valve (18'), a solenoid drive (34') and a check valve (42') which acts as a measuring limit valve and which is opened as from a particular pressure in the outlet duct (14'), so that fuel can flow from the outlet duct (14') into the inlet duct (12'), **characterized in that** the principal valve (18') is a directly acting valve, that in case of a differential pressure present above the sealing seat (24') of the principal valve (18') at first only the bypass valve (30') is able to be switched to the open position, and only after a pressure compensation has occurred at the sealing seat (24') of the principal valve (18') by the opening of the bypass valve (30') is the principal valve (18') also able to be switched to the open position by the solenoid drive (34'), and that the check valve (42') is integrated in a sealing body (22') of the principal valve (18').

2. The dispensing system according to claim 1, **characterized in that** the solenoid drive (34') engages a sealing body (25') of the bypass valve (30') directly and engages the sealing body (22') of the principal valve (18') by a lost-motion stroke.

3. The dispensing system according to claim 2, **characterized in that** the sealing seat (26') of the bypass valve (30') is formed in the sealing body (22') of the principal valve (18').

4. The dispensing system according to any of the preceding claims, **characterized in that**, with the pump active and the dispensing valve opened, the principal valve (18') is closed by momentarily switching the solenoid drive (34') off, and that upon switching the solenoid drive (34') back on it will remain closed due to the differential pressure prevailing above its sealing seat (24').

5. The dispensing system according to any of the preceding claims, **characterized in that** both valves (18', 30') are opened upon a pressure compensation at the sealing seat (24') of the principal valve (18') by switching the solenoid drive (34') on.

## Revendications

1. Système de soutirage pour distributeurs d'essence, comportant une pompe, une valve de soutirage dans un pistolet distributeur et une vanne magnétique (10') à pilotage électrique, qui présente une valve principale (18') à action directe et une valve de dérivation (30') montée en agencement de dérivation par rapport à la valve principale (18'), un moteur magnétique (34') et un clapet anti-retour (42') faisant office de valve de limite de mesure, laquelle s'ouvre à partir d'une pression déterminée dans la conduite de dérivation, de sorte que du carburant peut parvenir depuis la conduite de dérivation (14') jusque dans la conduite d'amenée (12'), **caractérisé en ce que** la valve principale (18') est une valve à action directe, **en ce que**, lorsqu'il y a une pression différentielle au-dessus du siège d'étanchéité (24') de la valve principale (18'), tout d'abord seulement la valve de dérivation (30') peut être commutée dans la position d'ouverture et seulement après avoir effectué une compensation de pression au niveau du siège (24') de la valve principale (18'), en ouvrant la valve de dérivation (30'), ladite valve principale aussi peut être commutée dans la position d'ouverture, et **en ce que** le clapet anti-retour (42') est intégrée dans un corps d'étanchéité (22') de la valve principale (18').

2. Système de soutirage selon la revendication 1, **caractérisé en ce que** le moteur magnétique (34') attaque directement un corps d'étanchéité (25') de la valve de dérivation (30) et, avec course à vide, le corps d'étanchéité (22') de la valve principale (18').

3. Système de soutirage selon la revendication 2, **caractérisé en ce que** le siège d'étanchéité (26') de la valve de dérivation (30') est formé dans le corps d'étanchéité (22') de la valve principale (18').

4. Système de soutirage selon l'une quelconque des revendications précédentes, **caractérisé en ce que** lorsque la pompe est active et la valve de soutirage est ouverte, la valve principale (18') est fermée en déconnectant momentanément le moteur magnétique (34') et lorsque le moteur magnétique (34') est remis en marche, elle reste fermée en raison de la pression différentielle régnant sur son siège d'étanchéité (4').

5. Système de soutirage selon l'une quelconque des revendications précédentes, **caractérisé en ce que** les deux valves (18', 30') sont ouvertes lorsqu'une compensation de pression est faite sur le siège d'étanchéité (24') de la valve principale (18') en mettant en marche le moteur magnétique (34').
